# EUROPEAN PATENT APPLICATION

(11) **EP 1 764 790 A2**
(43) Date of publication of application: **21.03.2007**
(21) Application number: 06118891.8
(22) Date of filing: 14.08.2006
(51) Int. Cl.: G11B 7/125

(54) **Optical recording/playback apparatus and method for adjusting playback parameters thereof**

(30) Priority: 16.09.2005 KR 20050086684
(71) Applicant: Samsung Electronics Co., Ltd., Suwon-si Gyeonggi-do (KR)
(72) Inventor: Yu, Jin Woo, Suwon-Si, Gyeonggi-Do (KR); Bang, Kyu Chul, Seoul (KR)
(74) Representative: Zimmer, Franz-Josef

(57) **Abstract**

An optical recording/playback apparatus and a method for adjusting playback parameters of the optical recording/playback apparatus are disclosed. The method includes loading an optical disc, determining whether there is data recorded on a data zone of the optical disc, recording test data on an optimal power control (OPC) zone on a playback parameter adjustment area of the optical disc at a reference power when there is no data recorded in the data zone, and adjusting a playback parameter while reading the playback parameter adjustment area, and recording data in the data zone after the adjustment.

## Description

### BACKGROUND OF THE INVENTION

### 1. Field of the Invention

The present invention relates to an optical recording/playback apparatus and, more particularly, to an optical recording/playback apparatus and a method for adjusting playback parameters thereof which can achieve an improvement in playback quality in accordance with appropriate adjustment for playback parameters carried out before recording of data on a blank optical disc.

### 2. Related Art

In accordance with the recent advance of multimedia industries, use of video data of a high picture quality and audio data of a high sound quality has greatly been increased. In pace with such a tendency, diverse high-density optical discs have been developed because conventional low-density optical discs, such as CD and DVD, have severe limitations in recording video data of a high picture quality or audio data of a high sound quality. An example of a high-density optical disc is a Blu-ray disc (BD). Similarly to CD and DVD, BD requires an optimal recording power when recording data in order to achieve an enhancement in recording quality. For this reason, an optimal power control (OPC) process is generally performed to determine an optimal recording power before recording of data on an associated optical disc, such as BD. To this end, an OPC zone is provided at a lead-in zone of the BD for the OPC process. Details of such an OPC process are disclosed in Korean Patent Laid-open Publication No. P2005-86072, and, as a result, need not be repeated herein.

Since such a BD is a high-density storage medium used to store video data of a high picture quality or audio data of a high sound quality, as mentioned above, the BD must have a high playback quality as well as a high recording quality. In order to achieve an enhancement in playback quality, playback parameters such as focus balance must be appropriately set. Once a BD is loaded in a BD apparatus, such as a BD recorder or a BD player, such playback parameters are set in a lead-in time before a normal playback operation.

The setting of playback parameters may be achieved using data recorded on a data zone of the BD, or using playback parameters previously stored in a flash memory of the BD recorder or BD player and subsequently read from the flash memory. Since BDs manufactured by different manufacturers may have different specifications, the flash memory must store diverse playback parameters associated with diverse disc manufacturers.

However, the method of setting playback parameters using data recorded in the data zone of a BD cannot be used for a blank disc, in the data zone of which there is no recorded data. On the other hand, the method of using playback parameters stored in the flash memory of a BD recorder or BD player in accordance with reading of the stored playback parameters can be used even for a blank disc. However, the latter method has a problem in that, when the optical pickup characteristics of the BD recorder or BD player are varied (for example, due to antiquation of the optical pickup), it is unsuitable to use the stored playback parameters as they are.

### SUMMARY OF THE INVENTION

Various aspects and example embodiments the present invention provide an optical recording/playback apparatus and a method for adjusting playback parameters thereof which can appropriately adjust playback parameters when a blank disc, on which there is no recorded data, is used.

Additional aspects and/or advantages of the invention will be set forth in part in the description which follows and, in part, will be obvious from the description, or may be learned by practice of the invention.

In accordance with an example embodiment of the present invention, a method for adjusting playback parameters of an optical recording/playback apparatus is provided with: loading an optical disc; determining whether or not there is data recorded on a data zone of the optical disc; recording test data on a playback parameter adjustment area in an optical power control (OPC) zone of the optical disc at a reference power, when there is no data recorded in the data zone; and adjusting a playback parameter while reading the playback parameter adjustment area in the OPC zone, and recording data in the data zone of the optical disc after the adjustment.

According to an aspect of the present invention, the playback parameter may comprise a focus balance or a recorded (RECD) signal. The reference power may be a power which is suited to the optical disc and is selected from powers respectively suited to optical discs of different optical disc manufacturers and recorded in an internal memory of the optical recording/playback apparatus, or an optimal power which is determined in accordance with an OPC executed prior to the recording of data on the playback parameter adjustment area.

According to an aspect of the present invention, the determination of whether there is data recorded on a data zone of the optical disc may be based on a state of a recorded (RECD) signal obtained in a playback operation for the data zone. The optical disc may be a Blue-ray disc (BD).

In accordance with another example embodiment of the present invention, an optical recording/playback apparatus is provided with: an optical pickup which records data on an optical disc or reads data recorded on the optical disc; and a controller which records data on a playback parameter adjustment area of an optimal power control (OPC) zone of the optical disc when there is no data recorded on a data zone of the optical disc, and adjusts a playback parameter while reading the data recorded on the playback parameter adjustment area.

According to an aspect of the present invention, the optical recording/playback apparatus may further comprise a memory for storing powers respectively suited to optical discs of different optical disc manufacturers. The controller may set, to the reference power, a power which is suited to the optical disc and is selected from the powers respectively suited to optical discs of different optical disc manufacturers and recorded in such a memory, or an optimal power which is determined in accordance with an OPC process executed prior to the recording of data on the playback parameter adjustment area.

According to an aspect of the present invention, the optical recording/playback apparatus may further comprise a radio frequency (RF) processor which receives an optical signal from the optical pickup, and outputs an RF signal and a recorded (RECD) signal based on the received optical signal. The controller may determine whether there is data recorded on a data zone of the optical disc based on a state of the RECD signal.

In accordance to yet another example embodiment of the present invention, an apparatus is provided with: an optical pickup to irradiate a laser beam onto an optical disc for recording and reproducing data; a memory to store parameters to perform an optimum power control (OPC) process, including powers respectively suited to optical discs of different optical disc manufacturers; and a controller arranged to control the optical pickup and to access the memory for performing the optimum power control (OPC) process, wherein the controller is configured to: determine if there is data recorded on a data zone of the optical disc; when there is no data recorded on the data zone of the optical disc, execute the OPC process on the optical disc; record test data on a playback parameter adjustment area on an OPC zone of the optical disc at a reference power for a subsequent determination of an optimum laser power suitable for recording data on the optical disc; and adjust a playback parameter while reading the playback parameter adjustment area, and record data in the data zone after the adjustment.

According to an aspect of the present invention, the OPC zone may be provided in a lead-in area of the optical disc, and the optical disc may be a Blu-ray disc (BD). The reference power may represent a power which is suited to the optical disc and is selected from powers respectively suited to optical discs of different optical disc manufacturers and recorded in the memory, or an optimal power which is determined in accordance with an OPC process executed prior to the recording of data on the playback parameter adjustment area.

According to an aspect of the present invention, the controller may further be configured to set, to the reference power, a power which is suited to the optical disc and is selected from the powers respectively suited to optical discs of different optical disc manufacturers and recorded in the memory, or an optimal power which is determined in accordance with an OPC process executed prior to the recording of data on the playback parameter adjustment area.

According to an aspect of the present invention, a radio frequency (RF) processor may further he arranged to receive an optical signal from the optical pickup, and generate an RF signal and a recorded (RECD) signal based on the received optical signal. The controller may then determine whether there is data recorded on a data zone of the optical disc based on a state of the RECD signal.

In addition to the example embodiments and aspects as described above, further aspects and embodiments of the present invention will be apparent by reference to the drawings and by study of the following descriptions.

### BRIEF DESCRIPTION OF THE DRAWINGS

A better understanding of present invention become apparent from the following detailed of example embodiments and the claims when read in connection with the accompanying drawings, all forming a part of the disclosure of invention. While the following written and illustrated disclosure focuses on disclosing example embodiments of the invention, it should be dearly understood that the same is by way of illustration and example only and that the invention is not limited thereto. The spirit and scope of the present invention are limited only by the terms of the appended claims. The following represents brief descriptions of the drawings, wherein:
FIG. 1 is a schematic view illustrating a structure of an optical disc, such as a blu-ray (BD) to which a method for adjusting playback parameters of an optical recording/playback apparatus is applied according to an embodiment of the present invention;
FIG. 2 is a block diagram illustrating an optical recording/playback apparatus according to an embodiment of the present invention; and
FIG. 3 is a flow chart illustrating the method for adjusting playback parameters of the optical recording/playback apparatus according to an embodiment of the present invention.

### DETAILED DESCRIPTION OF EXAMPLE EMBODIMENTS

Reference will now be made in to the present embodiments of the present invention, examples of which are illustrated in the accompanying drawings, wherein like reference numerals refer to the like elements throughout. The embodiments are described below in order to explain the present invention by referring to the figures.

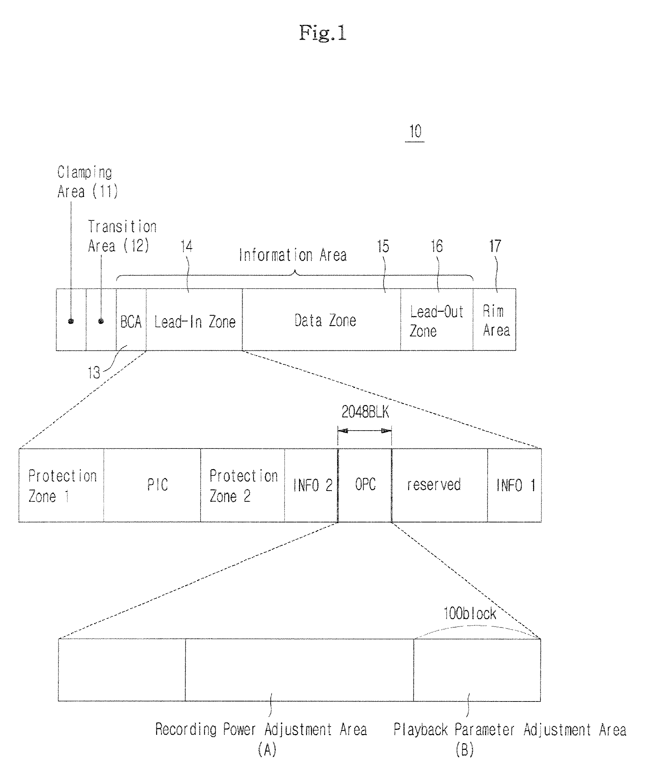

FIG. 1 is a schematic view illustrating an example optical disc, such as a Blu-ray (BD) to which a method for adjusting playback parameters of an optical recording/playback apparatus is applied according to an embodiment of the present invention. Referring to FIG. 1, an optical disc 10, such as a BD includes a clamping area 11, a transition area 12, an information area including a burst cutting area (BCA) 13, a lead-in zone 14, a data zone 14 and a lead-out zone 16, and a rim area 17 which are concentrically arranged in this order, starting from an inner periphery to an outer periphery of the optical disc 10.

The BCA 13 is an innermost zone of the information area which an optical recording/playback apparatus accesses when the associated BD 10 is loaded in the optical recording/playback apparatus. Principal information of the BD 10 such as a disc serial number is recorded on the BCA 13. In addition, the BCA 13 can also store other information such as code information to provide copy protection of the optical disc 10, i.e., copy protection information. When an optical disc 10 is inserted and seated in an optical recording/playback apparatus, the BCA 13 is accessed first among all areas on the optical disc 10.

The lead-in zone 14 is partitioned into a first protection zone (Protection Zone 1), a permanent information and control data (PIC) zone, a second protection zone (Protection Zone 2), a second information zone (INFO2), an OPC zone, a reserved zone (reserved), and a first information zone (INFO1). The first protection zone and PIC zone are pre-recorded areas on which data has previously been recorded, whereas the remaining zones of the lead-in zone, data zone, and lead-out zone are recordable areas on which new data will be recorded. The PIC zone is an area where principal information and general information of the optical disc 10 to be permanently preserved are recorded. High frequency modulated (HFM) grooves are formed in the PIC zone for recording of information.

The OPC zone includes a recording power adjustment area A and a playback parameter adjustment area B. The recording power adjustment area A is used to determine an optimal recording power for recording of data in the data zone 15, whereas the playback parameter adjustment area B is to determine playback parameters needed upon using a blank BD, in the data zone 15 of which there is no recorded data. The playback parameter adjustment area B has a wide area ranging from 0x1 bc00 to 0x1dc00 in PAAs (about 2,048 blocks).

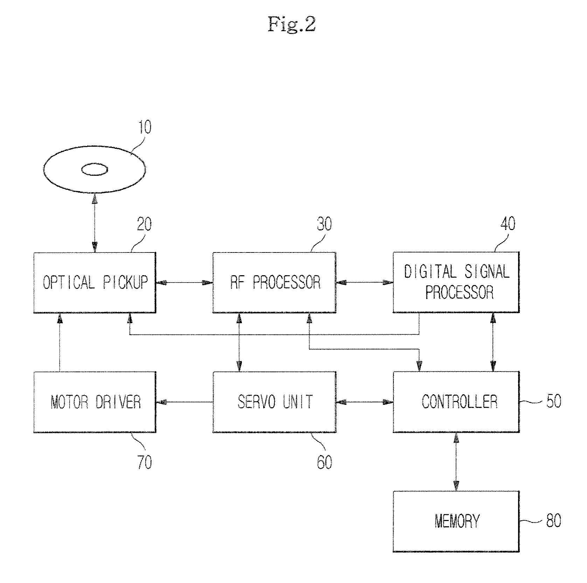

The playback parameters are parameters which have influence on the playback quality of the data stored in the data zone 15 of an optical disc 10, such as a BD. As such playback parameters, there are, for example, a focus balance and a recorded (RECD) signal. The focus balance is a parameter for preventing the eye pattern (or radio frequency (RF) signal) output from an RF processor, which will be described hereinafter with reference to FIG. 2, from being excessively deviated from a reference level. When the eye pattern is deviated from a predetermined range, the focus balance parameter adjusts the eye pattern to be within the predetermined range. The RECD signal is a signal informing of whether or not there is data recorded in the data zone 15 of an optical disc 10 which is being read. When the RECD signal has a high level, this signal represents the fact that there is data recorded in the data zone 15. On the other hand, when the RECD signal has a low level, this signal represents the fact that there is no data recorded in the data zone 15.

In the example embodiment, shown in FIG. 1, the playback parameter adjustment area B is assigned about 100 blocks. The remaining area of the OPC zone is mainly used as the recording power adjustment area A. Other example configurations of an optical disc such as a BD are disclosed in detail in Korean Patent Laid-open Publication No. P2004-99804, the disclosure of which in incorporated by reference herein.

Turning now to FIG. 2, an example optical recording/playback apparatus for recording/reproducing data on/from a high-density optical disc such as a BD according to an embodiment of the present invention is illustrated. Referring to FIG. 2, the optical recording/playback apparatus according to an embodiment of the present invention includes an optical disc 10, such as a BD, an optical pickup 20, an RF processor 30, a digital signal processor 40, a controller 50, a servo unit 60, a motor driver 70, and a memory 80. For purposes of brevity, the optical recording/playback apparatus, albeit in whole or in part, can also be referred to as a drive system which can be internal (housed within a host) or external (housed in a separate box that connects to a host (not shown)). The optical disc can be any high-density medium, such as blue-ray disc (BD); however, other optical discs can also be utilized, including DVD, DVD-R, DVD-RW, DVD+RW, DVD-RAM, DVD-ROM, CD, CD-R, CD-RW, and CD-ROM. In addition, such an optical disc apparatus may be a single apparatus, or may be separated into a recording apparatus (i.e., BD recorder), and a reading apparatus (i.e., BD player).

The optical pickup 20 emits a laser beam to a BD 10 to record data on the BD 10 or to read data recorded on the BD 10. The RF processor 30 receives an optical signal from the optical pickup 20, thereby generating an RF signal and an RECD signal. The RF processor 30 outputs the RF signal and RECD signal to the digital signal processor 40 and the controller 50, respectively.

The digital signal processor 40 converts the RF signal output from the RF processor 30 to a corresponding digital signal, namely, demodulates the read data or modulates the data to be recorded. The controller 50 controls the optical pickup 20, the RF processor 30, the digital signal processor 40, and the servo unit 60. The controller 50 applies focus servo and tracking servo ON/OFF commands to the servo unit 60.

The servo unit 60 generates drive signals for focusing, tracking, and spindling operations, based on the RF signal generated from the RF processor 30, under the control of the controller 50. The motor driver 70 performs servo control to vary a rotational speed of the BD 10 and a position of the optical pickup 20 under the control of the servo unit 60.

The memory 80 stores data required for operation of the controller 50, and includes parameters to perform the OPC process, i.e., an optimal recording power to be used for recording of test data on the playback parameter adjustment area B. Since BDs manufactured by different manufacturers may have different specifications, the memory 80 may store diverse optimal recording powers associated with diverse disc manufacturers. In addition, not shown in FIG. 2 is a key-input unit used to input signals into the controller 70 to open/ctose a disc tray to receive the BD 10, to turn ON/OFF the optical recording/playback apparatus, and to record, playback or erase on the BD 10.

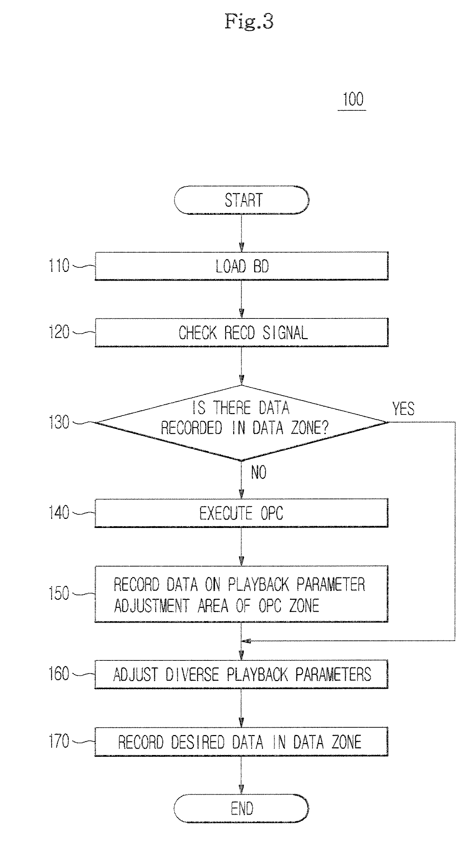

Hereinafter, a method for controlling playback parameters of the above-described optical recording/playback apparatus according an example embodiment of the present invention will be described with reference to FIG. 3.

When the user loads a BD 10 in an optical disc driver (not shown) of the optical recording/playback apparatus (namely, a BD recorder or a BD player), the optical pickup 20 reads the data zone 15 of the BD 10, as shown in FIG. 1, and the RF processor 30 then outputs an RF signal and an RECD signal based on an optical signal output from the optical pickup 20 at block 110.

The controller 50 checks whether the RECD signal has a high level or a low level at block 120, and then determines whether or not there is data recorded in the data zone 15 of the BD 10 at block 130.

If there is no data recorded in the data zone 15 of the BD 10, the controller 50 executes an OPC process at block 140. For the OPC process, the optical pickup 20 emits laser beams of diverse optical powers to record test data on the recording power adjustment area A in the OPC zone, as shown in FIG. 1. The controller 50 determines an optimal recording power while identifying the quality of the test data recorded on the recording power adjustment area A.

Next, the optical pickup 20 records test data an the playback parameter adjustment area B at the optimal recording power determined in the previous operation at block 150. The controller 50 then adjusts diverse playback parameters while playing back the test data recorded on playback parameter adjustment area B in the OPC zone, as shown in FIG. 1 at block 160. For example, when the total level of an eye pattern generated based on the results of the operation of reading the playback parameter adjustment area B is excessively higher or lower than a reference level without being in a predetermined range with respect to the reference level, the controller 50 adjusts the level of the eye pattern to be approximate to the reference level (focus balance adjustment). If the level of the eye pattern is deviated from the reference level outside the predetermined range, the eye pattern cannot be accurately converted to a corresponding digital signal when the data recorded in the data zone 15 of the BD 10 is played back, so that a degradation in playback quality occurs. In this case, accordingly, adjustment of the focus balance is executed to cause the eye pattern to be within the predetermined range with respect to the reference level.

On the other hand, for example, when the RECD signal output from the RF processor 30 based on the results of the operation of reading the test data recorded on the playback parameter adjustment area B is a low-level signal representing an unrecorded state, the RECD signal is adjusted to be a high-level signal representing a recoded state because there is an error in the RECD signal. If the RECD signal is not adjusted in spite of the fact that there is an error in the RECD signal, as in the above case, it is erroneously determined that there is no data in the data-recorded area 15 of the BD 10. In this case, other data may be recorded on the data-recorded area 15 in an overlapped state. As a result, a degradation in playback quality may occur when playback is carried out for the data-overlapped area.

When there is data recorded in the data zone 15 of the BD 10 at block 130, the controller 50 adjusts various playback parameters based on the data recorded in the data zone 15 at block 160. After completion of the playback parameter adjustment, the optical unit 20 records desired data in the data zone 15 at an optimal recording power determined in the OPC process under the control of the controller 50 at block 170.

Although recording of data is carried out using an optical recording power determined during the OPC process involving recording of test data on the playback parameter adjustment area B in the example embodiment, recording of data may be carried out using an optimal recording power, suited to the loaded BD, selected from diverse optimal recording powers previously stored in the memory 80.

As apparent from the above description, in accordance with the present invention, when a blank BD is used, test data is recorded on a part of the OPC zone of the BD prior to recording of data in the data zone of the BD, to adjust playback parameters. As a result, the occurrence of degradation in playback quality during playback of data recorded in the data zone can advantageously be prevented.

White the structure of a high-density optical disc, such as a BD and an optical recording/playback apparatus of the present invention has been particularly shown and described with reference to exemplary embodiments thereof, it will be understood by those of ordinary skill in the art that various changes in form and details may be made therein without departing from the spirit and scope of the present invention. For example, other recording media, such as DVD, DVD-R, DVD-RW, DVD+RW, DVD-RAM, DVD-ROM, CD, CD-R, CD-RW, CD-ROM and other data storage devices may be utilized, as long as the OPC is implemented in the manner as described with reference to FIG. 1, FIG. 2 and FIG. 3. In addition, the test zone can be fixed and/or flexible in designated areas of an optical disc. Similarly, the system controller can be implemented as a chipset having firmware, or alternatively, a general or special purposed computer programmed to implement methods as described with reference to FIG. 3. Accordingly, it is intended, therefore, that the present invention not be limited to the various example embodiments disclosed, but that the present invention includes all embodiments falling within the scope of the appended claims.

## Claims

1. A method for adjusting playback parameters of an optical recording/playback apparatus comprising:
loading an optical disc;
determining whether there is data recorded on a data zone of the optical disc;
when there is no data recorded in the data zone of the optical disc, recording test data on a playback parameter adjustment area in an optimal power control (OPC) zone of the optical disc at a reference power; and
adjusting a playback parameter, while reading the playback parameter adjustment area in the OPC zone, and recording data in the data zone of the optical disc after the adjustment.

2. The method according to claim 1, wherein the playback parameter comprises a focus balance or a recorded (RECD) signal.

3. The method according to claim 1, wherein the reference power is a power which is suited to the optical disc and is selected from powers respectively suited to optical discs of different optical disc manufacturers and recorded in an internal memory of the optical recording/playback apparatus, or an optimal power which is determined in accordance with an OPC executed prior to the recording of data on the playback parameter adjustment area.

4. The method according to claim 1, wherein whether there is data recorded on a data zone of the optical disc is determined based on a state of a recorded (RECD) signal obtained in a playback operation for the data zone of the optical disc.

5. The method according to claim 1, wherein the optical disc is a Blu-ray disc (BD).

6. An optical recording/playback apparatus comprising:
an optical pickup to record data on an optical disc or read data recorded on the optical disc; and
a controller configured to control the optical pickup to record data on a playback parameter adjustment area in an optimal power control (OPC) zone of the optical disc, when there is no data recorded on a data zone of the optical disc, and to adjust a playback parameter while reading the data recorded on the playback parameter adjustment area.

7. The optical recording/playback apparatus according to claim 6, further comprising:
a memory to store powers respectively suited to optical discs of different optical disc manufacturers,
wherein the controller sets, to the reference power, a power which is suited to the optical disc and is selected from the powers respectively suited to optical discs of different optical disc manufacturers and recorded in the memory, or an optimal power which is determined in accordance with an OPC executed prior to the recording of data on the playback parameter adjustment area.

8. The optical recording/playback apparatus according to claim 6, further comprising:
a radio frequency (RF) processor arranged to receive an optical signal from the optical pickup, and generate an RF signal and a recorded (RECD) signal based on the received optical signal,
wherein the controller determines whether there is data recorded on a data zone of the optical disc based on a state of the RECD signal.

9. The optical recording/playback apparatus according to claim 8, wherein the playback parameter comprises a focus balance or a recorded (RECD) signal.

10. The optical recording/playback apparatus according to claim 9, wherein, when an OPC zone is provided in a lead-in area of the optical disc, the controller executes the OPC process in the OPC zone.

11. An apparatus comprising:
an optical pickup to irradiate a laser beam onto an optical disc for recording and reproducing data;
a memory to store parameters to perform an optimum power control (OPC) process, including powers respectively suited to optical discs of different optical disc manufacturers;
a controller arranged to control the optical pickup and to access the memory for performing the optimum power control (OPC) process, wherein the controller is configured to:
determine if there is data recorded on a data zone of the optical disc;
when there is no data recorded on the data zone of the optical disc, execute the OPC process on the optical disc;
record test data on a playback parameter adjustment area on an OPC zone of the optical disc at a reference power for a subsequent determination of an optimum laser power suitable for recording data on the optical disc; and
adjust a playback parameter while reading the playback parameter adjustment area, and record data in the data zone after the adjustment.

12. The apparatus according to claim 12, wherein, when an OPC zone is provided in a lead-in area of the optical disc, the controller executes the OPC process in the OPC zone.

13. The apparatus according to claim 12, wherein the reference power is a power which is suited to the optical disc and is selected from powers respectively suited to optical discs of different optical disc manufacturers and recorded in the memory, or an optimal power which is determined in accordance with an OPC process executed prior to the recording of data on the playback parameter adjustment area.

14. The apparatus according to claim 12, wherein the controller is further configured to set, to the reference power, a power which is suited to the optical disc and is selected from the powers respectively suited to optical discs of different optical disc manufacturers and recorded in the memory, or an optimal power which is determined in accordance with an OPC process executed prior to the recording of data on the playback parameter adjustment area.

15. The apparatus according to claim 13, further comprising:
a radio frequency (RF) processor arranged to receive an optical signal from the optical pickup, and generate an RF signal and a recorded (RECD) signal based on the received optical signal,
wherein the controller determines whether there is data recorded on a data zone of the optical disc based on a of the RECD signal.

16. The apparatus according to claim 13, wherein the optical disc is a Blu-ray disc (BD).
